(19) Europäisches Patentamt
European Patent Office
Office européen des brevets

(11) **EP 2 470 392 B1**

(12) **EUROPÄISCHE PATENTSCHRIFT**

(45) Veröffentlichungstag und Bekanntmachung des Hinweises auf die Patenterteilung:
**07.08.2013  Patentblatt 2013/32**

(21) Anmeldenummer: **11726647.8**

(22) Anmeldetag: **03.06.2011**

(51) Int Cl.:
**B60K 17/346** *(2006.01)*

(86) Internationale Anmeldenummer:
**PCT/AT2011/000250**

(87) Internationale Veröffentlichungsnummer:
**WO 2011/160144 (29.12.2011 Gazette 2011/52)**

(54) **VERTEILERGETRIEBE**

TRANSFER CASE

BOITE DE TRANSFERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2010  AT 10812010**

(43) Veröffentlichungstag der Anmeldung:
**04.07.2012  Patentblatt 2012/27**

(73) Patentinhaber: **Oberaigner, Paul Roman**
**4150 Berg bei Rohrbach (AT)**

(72) Erfinder: **Oberaigner, Paul Roman**
**4150 Berg bei Rohrbach (AT)**

(74) Vertreter: **Wildhack & Jellinek**
**Patentanwälte**
**Landstraßer Hauptstraße 50**
**1030 Wien (AT)**

(56) Entgegenhaltungen:
**WO-A1-02/42106      WO-A1-2009/069255**
**US-A1- 2006 128 515   US-A1- 2007 049 451**
**US-A1- 2007 180 940**

**Beschreibung**

Die Erfindung betrifft ein Verteilungsgetriebe, insbesondere ein Zweigang-Verteilergetriebe in sogenannter Single-Offset Bauweise.

Derartige Verteilergetriebe sind in der Regel direkt an ein längs eingebautes Hauptgetriebe angeflanscht und besitzen eine Eingangs- und zwei Abtriebswellen, wobei eine Abtriebswelle koaxial zur Eingangswelle verläuft und die andere Abtriebswelle versetzt ist. Üblicherweise wird der Abtrieb zur Vorderachse versetzt, um die vordere Gelenkwelle an Fahrzeuggetriebe und/ oder Motor vorbei zum Vorderachsgetriebe führen zu können.

Verteilergetriebe erfüllen im Wesentlichen zwei Funktionen. Sie verteilen das Drehmoment in einem sinnvollen Verhältnis zwischen den Antriebsachsen und - sofern erforderlich - werden unterschiedliche Übersetzungen bereitgestellt. In der Regel handelt es sich dabei um einen Direktgang (Übersetzung 1,0) sowie um einen ins Langsame übersetzenden Geländegang.

Bei Geländewagen und leichten Nutzfahrzeugen liegen günstige Werte für die Geländeuntersetzung im Bereich zwischen 2,0 und 2,5. Kleinere Untersetzungen können die Geländegängigkeit des Fahrzeugs erschweren. Noch größere Werte für die Untersetzung bringen nur mehr im extremen Gelände und/oder bei kommunalen Arbeitsmaschinen Vorteile. Von Vorteil ist es, wenn die Schaltung zwischen Straßen- und Geländegang auch während dem Fahrbetrieb möglich ist. Da die reduzierten rotierenden Trägheiten bezogen auf die Welle des Synchronrings im Wesentlichen quadratisch mit dem Stufensprung steigen, können sehr große Geländeuntersetzungen nicht mehr mit vertretbarem Aufwand synchronisiert werden.

Übliche Verteilergetriebe verwenden zumeist einen einfachen Planetenradsatz zum Erzeugen der Geländeuntersetzung, dabei sind der Wahl der Übersetzung konstruktive Grenzen gesetzt. Die Durchmesser der Planetenräder können nicht beliebig verkleinert werden, da andernfalls keine sinnvolle Lagerung mehr möglich ist und die Lagerdrehzahlen sehr stark ansteigen würden. Weiters ist die Belastbarkeit des Planetengetriebes bei sehr kleinen Planetenraddurchmessern eingeschränkt, da die Zahnflankenpressung stark ansteigt. Der Durchmesser des Sonnenrades kann ebenfalls nicht beliebig klein gestaltet werden, da häufig andere Wellen durch das Sonnenrad durchgeführt werden müssen. Ein kennzeichnendes Merkmal ist die Standübersetzung, die bei einem einfachen Planetengetriebe aus dem Zähnezahlverhältnis von Hohlrad zu Sonnenrad bestimmbar ist und bei ausgewogenen Konstruktionen in der Regel zwischen -1,75 (bei kleinem Durchmesser der Planetenräder) und -5,0 (bei kleinem Durchmesser des Sonnenrades) liegt. Diese Werte werden im Folgenden für Beispiele als konstruktive Grenzwerte von Übersetzungen und Drehmomentverteilungen verwendet.

Erfolgt der Antrieb auf das Hohlrad (bei festgehaltenem Sonnenrad), dann sind damit Geländeuntersetzungen zwischen 1,2 und 1,57 darstellbar, was für einen Geländebetrieb zu wenig sein kann. Es ist nicht möglich, bei ausgewogener Gestaltung noch größere Geländeuntersetzungen darzustellen, da die Durchmesser der Planetenräder zu klein werden.

Erfolgt der Antrieb auf das Sonnenrad (bei festgehaltenem Hohlrad), dann können Geländeuntersetzungen von 2,75 bis 6,0 dargestellt werden. Die Geländeuntersetzung ist somit größer, als angestrebt wird. Es ist nicht möglich, bei ausgewogener Gestaltung noch kleinere Geländeuntersetzungen darzustellen, da die Durchmesser der Planetenräder zu klein werden. In der Praxis werden trotz wirtschaftlicher und konstruktiver Nachteile auch Geländeuntersetzungen im Bereich von 2,6 ausgeführt.

Im Hinblick auf den Wirkungsgrad des Verteilergetriebes sollten im Straßengang lastfrei mitlaufende Verzahnungen vermieden werden, da sie zusätzliche Schleppverluste generieren und den Getriebewirkungsgrad verschlechtern. Weiters erfordern aus Gründen des Geräuschkomforts ständig mitlaufende Zahnräder zumeist eine Schrägverzahnung, was zusätzlichen Aufwand für die Aufnahme von Axialkräften erfordert und dadurch zu höheren Herstellungskosten führt.

Weiters soll das Verteilergetriebe das Drehmoment in einem sinnvollen Verhältnis zwischen beiden Achsen verteilen. Die Verteilung kann über zumindest ein Differentialgetriebe und/oder eine Kupplung erfolgen. Erfolgt die Verteilung über ein Differentialgetriebe, dann erfolgt die Verteilung der Antriebsmomente in einem bestimmten Verhältnis zwischen Vorder- und Hinterachse. Die Auswahl einer Verteilung erfolgt insbesondere im Hinblick auf die Traktion und das Fahrverhalten. Zum Erzielen einer optimalen Traktion sollte sich die Drehmomentverteilung des Fahrzeugs an den dynamischen Achslasten orientieren. Die dynamischen Achslasten hängen im Wesentlichen vom Beladungszustand des Fahrzeugs, von der Beschleunigung und der Fahrbahnsteigung ab, die Wahl einer Drehmomentverteilung ist somit stets ein Kompromiss.

Bei allradgetriebenen Geländewagen und leichten Nutzfahrzeugen mit Frontmotor wird zumeist eine Verteilung im Verhältnis 50:50 bis 30:70 zwischen Vorder- und Hinterachse ausgeführt. Eine symmetrische Verteilung der Drehmomente im Verhältnis 50:50 zwischen Vorder- und Hinterachse wird vorteilhafterweise mit einem Kegelraddifferential dargestellt. Der Einsatz von Kegelraddifferentialen für asymmetrische Drehmomentverteilungen ist unüblich. Bei ausgewogener Ausgestaltung können mit einem einfachen Planetenradsatz asymmetrische Verteilungen mit einem Vorderachsanteil zwischen 16,7% und 36,3% dargestellt werden. Ein noch höherer Vorderachsanteil lässt sich nur schwer darstellen, da die Durchmesser der Planetenräder zu klein werden. Häufig ist es jedoch so, dass eine Verteilung mit einem Vorderachsanteil von ca. 40 bis 45% günstig ist. Um die Lücke der möglichen Drehmomentverteilungen zwischen einfachem Kegelraddifferential und einfachem Planetenradsatz zu schließen, werden Planetengetriebe mit komplexerem Aufbau verwendet, beispielsweise mit gepaarten, untereinander kämmenden Planetenrädern oder mit gestuften Planetenrädern. Die Verteilung kann beispielsweise mit einem Doppelplanetenradsatz (z.B. DE19538661C) erfolgen. Eine weitere, überwiegend aus Sperrdifferentialen bekannte Lösung ist es, zwei Sonnenräder und Planetenradpaare zu verwenden (z.B. W0002002065000A2)

Aus WO002002008006A1 ist ein Verteilergetriebe bekannt, bei dem die Geländeuntersetzung über Stufenplaneten gebildet wird. Stufenplaneten haben einen großen Aufwand in der Fertigung zur Folge, da die kleinere Verzahnung üblicherweise nicht durch Wälzfräsen hergestellt werden kann. Zum Erzielen einer hohen Drehmomentdichte werden üblicherweise drei oder mehr Planetenräder ausgeführt. Um mehrere Stufenplaneten korrekt montieren zu können, müssen auf den Planetenrädern Markierungen für den Einbau angebracht werden. Eine weitgehend automatisierte, hochproduktive Zahnradfertigung und Getriebemontage kann nur schwer erreicht werden.

Vorteilhaft kann es sein, wenn das Abtriebsrad zur Vorderachse weit vorne positioniert ist. Aus WO001999001310A1 ist ein Verteilergetriebe bekannt, bei dem Untersetzung und Differentialgetriebe eine hinter dem Abtriebsrad befindliche Einheit darstellen. Unsymmetrische Drehmomentverteilungen lassen sich mit diesem Verteilergetriebe mit zwei Sonnenrädern und Planetenradpaaren darstellen, was aber mit einem erhöhten baulichen Aufwand verbunden ist, eine Vergrößerung der Baulänge des Verteilergetriebes zur Folge hat und die Anzahl der Bauteile beträchtlich erhöht. Eine Geländeuntersetzung deutlich unter 2,75 ist nicht ausgewogen darstellbar, weiters wälzen die Verzahnungen der Untersetzung auch im Fahrbetrieb ab. Eine Sperrkupplung für das Längsdifferential ist nicht vorgesehen.

In der aus EP000001254326B1 bekannten Weiterentwicklung von WO001999001310A1 wird durch ein Verschalten von Hohlrad und Planetenträger ein Abwälzen im Straßengang unterbunden. Das Drehmoment wird aber über Laufverzahnungen der Untersetzung übertragen, sodass es im Straßengang beispielsweise bei Fehlbedienungslasten zu höheren Zahnkräften als bei geschalteter Untersetzung kommen kann. Diese in US4569252 näher erläuterte Problematik ist für die Dimensionierung der Verzahnungen von Nachteil. Mit einer Reibungskupplung zwischen dem Planetenträger und dem vorderen Abtriebsrad kann das Längsdifferential gesperrt werden. Falls Drehmoment zur Hinterachse umverteilt wird, dann geschieht dies über die Verzahnung des Längsdifferentials, die entsprechend höheren Belastungen ausgesetzt sind. Die hohe Beanspruchung der Verzahnungen steht dem Ziel einer kompakten, kostengünstigen Ausführung mit hoher Drehmomentdichte entgegen. Die große Geländeuntersetzung stellt sehr hohe Ansprüche an die Synchronisierung, weiters ist eine asymmetrische Drehmomentverteilung nur mit einer hohen Teileanzahl und damit erhöhtem Aufwand erreichbar.

Aus DE19538661C ist ein Verteilergetriebe bekannt, bei dem die Geländeuntersetzung mit einem Doppelplanetenradsatz ausgeführt wird. Ebenso ist das Längsdifferential als Doppelplanetenradsatz ausgeführt. Der geringe Achsabstand der miteinander kämmenden Planetenradpaare führt zu einer sehr hohen Zahnflankenpressung. Infolge der miteinander kämmenden Planetenradpaare können nur wenige Planetenräder am Umfang angebracht werden, was die Drehmomentdichte zusätzlich beschränkt. Bei der vorgesehenen Verschaltung kommt es im Straßengang zu keinem Abwälzen, aber zu hohen Zahnkräften. Mit dem Doppelplanetenradsatz können Geländeuntersetzung von beispielsweise 2,0 bis 2,5 problemlos dargestellt werden. Der Verzahnungswirkungsgrad ist niedriger als bei einem einfachen Planetenradsatz, woraus ein Mehrverbrauch und ein Größerer Anfall von Verlustwärme resultieren kann.

Eine Verteilergetriebe nach dem Oberbegriff des Anspruchs 1 ist aus der WO 02/421 06 bekannt.

Ziel der Erfindung ist es, ein kompakt bauendes, betriebssicheres und kostengünstiges Zweigang Verteilergetriebe mit einem versetztem Abtrieb zu schaffen, das bei ausgewogener konstruktiver Gestaltung eine Geländeuntersetzung von ca. 2,0 bis 2,6 erreicht und das Drehmoment zwischen Vorder- und Hinterachse(n) in einem Verhältnis von ca. 45:55 bis 38:62 aufteilen kann.

Diese Ziele werden bei einem Verteilergetriebe der eingangs genannten Art mit den im Kennzeichen des Anspruches 1 angeführten Merkmalen erreicht.

Anspruch 2 und Anspruch 3 betreffen konkrete Ausführungsformen der Leistungsübertragung zum versetzten Abtrieb.

Von Vorteil sind die Ansprüche 4,5 und 6. Damit wird die Funktionalität des Verteilergetriebes erweitert.

Anspruch 7 betrifft eine besonders kostengünstige Ausführung des Verteilergetriebes mit hoher Gleichteileanzahl und geringer Teilevielfalt.

Die Ansprüche 8 bis 13 betreffen sechs unterschiedliche Arten, wie die Getriebeelemente im Gehäuse des erfindungsgemäßen Verteilergetriebes angeordnet werden können.

Anspruch 14 betrifft die Gestaltung der Schaltung der Untersetzung.

Anspruch 15 betrifft eine Variante des Verteilergetriebes, bei der der Allradantrieb auch weggeschaltet werden kann.

Es wird bemerkt, dass durchwegs mit "vorne" jene Seite des Verteilergetriebes gemeint ist, die näher an der Eingangswelle liegt und mit "hinten" jene Seite die der Eingangswelle entfernter liegt.

Das Ziel der Erfindung wird erreicht, indem zwei gekoppelte einfache Planetenradsätze verwendet werden. Diese beiden Planetenradsätze können mit vielen Gleichteilen ausgeführt sein, insbesondere können die Verzahnungen identisch ausgeführt sein. Bei der erfindungsgemäßen Ausführung des Verteilergetriebes gibt es keine völlige funktionale Trennung von Untersetzungsgetriebe und Längsdifferential mehr, vielmehr stellen die beiden Planetenradsätze gemeinsam eine kombinierte Differential- / Untersetzungseinheit dar. Wenn bei dem erfindungsgemäßen Verteilergetriebe die beiden Planetenradsätze mit gleichen Verzahnungen und gleicher Planetenanzahl ausgeführt werden, dann liegen in beiden Planetenradsätzen gleiche Zahnkräfte vor. Damit wird vorteilhafterweise der Kostenvorteil von Gleichteilen mit einer ausgeglichenen Dimensionierung kombiniert.

Die Eingangswelle wirkt auf das innenverzahnte Hohlrad des ersten Planetenradsatzes. Das Hohlrad kämmt mit mehreren Planetenrädern, die im Planetenträger drehbar gelagert sind. Der Planetenträger ist mit der Abtriebswelle zur Hinterachse verbunden.

Das Sonnenrad des ersten Planetenradsatzes ist mit dem Sonnenrad des zweiten Planetenradsatzes verbunden. Vorteilhafterweise wird für die beiden Sonnenräder ein gemeinsames Rohteil verwendet. Im Hinblick auf die Herstellungskosten kann es günstig sein, wenn beide Verzahnungen mit gleichen Verzahnungsdaten ausgeführt werden, sodass sie in einem Schritt mit gleichem Verzahnungswerkzeug hergestellt werden können.

Das zweite Sonnenrad kämmt mit Planetenrädern, die im Planetenträger des zweiten Planetenradsatzes drehbar gelagert sind. Diese Planetenräder kämmen mit dem zweiten Hohlrad, das mit dem Abtriebsrad zur Vorderachse verbunden ist. Der Abtrieb zur Vorderachse kann durch dem Fachmann bekannte Ausführungsformen erfolgen, insbesondere durch ein Stirnradgetriebe oder durch ein Zahnkettengetriebe. Denkbar ist es auch kegelige Stirnräder (insbesondere Beveloid-Stirnräder) als Versatzgetriebe zu verwenden.

Der Planetenträger des zweiten Planetenradsatzes kann entweder mit dem Getriebegehäuse oder mit der Eingangswelle bzw. dem damit antriebsmäßig verbundenen Hohlrad verschaltet werden oder eine Neutralstellung einnehmen. Zusätzlich ist es bei entsprechender konstruktiver Gestaltung denkbar, den Planetenträger sowohl mit dem Getriebegehäuse, als auch mit dem Hohlrad zu verschalten und auf diese Weise eine Parksperre darzustellen. Bei Ausführung der Schaltverzahnung und der Gestaltung der Schaltung stehen dem Fachmann bekannte Ausführungen zur Verfügung. Die Innenverzahnung des Hohlrades kann auch als Schaltverzahnung genutzt werden. Die Schaltung kann automatisch oder manuell durchgeführt werden. Insbesondere kann die Betätigung der Schaltung elektromotorisch oder hydraulisch oder pneumatisch erfolgen und vom Fahrer durch ein Bedienelement initiiert werden. Die Schaltung kann auch synchronisiert sein. Ist der Planetenträger des zweiten Planetenradsatzes mit der Eingangswelle verschaltet, dann ist die Verteilergetriebeübersetzung 1,0 (d.h. Straßengang). Ist der Planetenträger des zweiten Planetenradsatzes mit dem Gehäuse verschaltet, dann erfolgt eine Übersetzung ins Langsame (d.h. Geländegang) Die sich ergebende Geländeuntersetzung $i_{Low}$ ist mit folgender Formel bestimmbar:

$$i_{Low} = \frac{i_{P1} + i_{P2} - 1}{i_{P1}}$$

Hierbei stellt $i_{P1}$ die Standübersetzung des ersten Planetenradsatzes dar und $i_{P2}$ die Standübersetzung des zweiten Planetenradsatzes. Mit identen Standübersetzungen ($i_{P1} = i_{P2}$ und den Grenzen $-1,75 \geq i_{P1} = i_{P2} \geq -5$ kann beispielsweise eine Geländeuntersetzung $2,2 \leq i_{Low} \leq 2,57$ dargestellt werden. Der darstellbare Bereich der Geländeuntersetzung kann erweitert werden, falls die beiden Planetenradsätze unterschiedlich ausgeführt werden. Gegenüber bekannten, konventionell aufgebauten Verteilergetrieben mit ähnlicher Geländeuntersetzung sind die Zahnkräfte bedeutend geringer, weil das volle Eingangsmoment nicht auf das Sonnenrad, sondern auf wesentlich größerem Durchmesser (Hohlrad) eingeleitet wird. Dadurch ergibt sich ein belastbares, leichtes und kompaktes Verteilergetriebe.

Bezieht man das Vorderachsdrehmoment $T_{VA}$ auf das Gesamtmoment $T_{Ges}$ (Summe von Vorderachsmoment $T_{VA}$ und Hinterachsmoment $T_{HA}$), dann kann der Vorderachsanteil (unter Vernachlässigung der Reibung) nach folgender Formel bestimmt werden:

$$\frac{T_{VA}}{T_{Ges}} = \frac{i_{P2}}{i_{P1} + i_{P2} - 1}$$

Hierbei stellt $i_{P1}$ die Standübersetzung des ersten Planetenradsatzes dar und $i_{P2}$ die Standübersetzung des zweiten Planetenradsatzes. Mit identen Standübersetzungen ($iP_1 = iP_2$) und den Grenzen $-1,75 \geq i_{P1} = i_{P2} \geq -5$ kann beispielsweise ein Vorderachsanteil zwischen 38,9% und 45,5% dargestellt werden.

Die Drehmomentaufteilung hängt nicht davon ab, ob der Straßen- oder der Geländegang geschaltet ist. Der Vorderachsanteil liegt in einem Bereich, der für Geländewagen und leichte Nutzfahrzeuge sinnvoll ist.

Zum Erzielen einer verbesserten Traktion kann der Drehzahlausgleich zwischen Vorder- und Hinterachse sperrbar gestaltet sein, sodass der Drehzahlausgleich zwischen den Achsen in geeigneter Weise behindert werden kann. Die Sperre wirkt zwischen hinterer Abtriebswelle und Abtriebsrad, sodass sie zu keinen erhöhten Zahnkräften in den Planetengetrieben führt. Insbesondere kann die Sperre als selbstregelnde Flüssigkeitsreibungskupplung, als Reibungskupplung oder als Klauenkupplung ausgeführt sein. Die Reibungskupplung kann eine durch Federkraft vorgespannte Lamellenkupplung sein und/oder elektronisch, vorzugsweise elektromotorisch oder hydraulisch, betätigt werden und kann vorteilhafterweise von ihrerer Wirkung her abgestuft werden. Die Reibungskupplung kann in ein Fahrdynamikregelsystem eingebunden sein.

Es kann vorteilhaft sein, den Antrieb zur versetzten Achse auch wegschaltbar zu gestalten. Durch ein völliges Stilllegen eines Teilantriebsstrangs kann der Wirkungsgrad des Triebstrangs gesteigert werden. Bei Bedarf kann der Allradantrieb wieder zugeschaltet werden. Bei dem erfindungsgemäßen Verteilergetriebe kann ein derartiger Zweiradantriebsmodus realisiert werden, indem das obere Abtriebsrad über eine Kupplung antriebsmäßig entkoppelt wird und gleichzeitig die Sperre geschlossen wird.

Im Folgenden wird die Erfindung anhand von Darstellungen näher erläutert.

Fig. 1 bis Fig. 6 zeigen schematisch Ausgestaltungsformen des Verteilergetriebes.

Fig. 7a, 7b, 8a und 8b zeigen beispielhaft mit Hilfe von Drehzahl- und Drehmomentangaben die Funktionsweise des Verteilergetriebes.

Fig. 9 zeigt den Aufbau eines Kraftfahrzeugantriebsstrangs, in dem das erfindungsgemäße Verteilergetriebe eingesetzt werden kann.

Fig. 10 zeigt die Möglichkeit, den Allradantrieb zu- oder wegzuschalten.

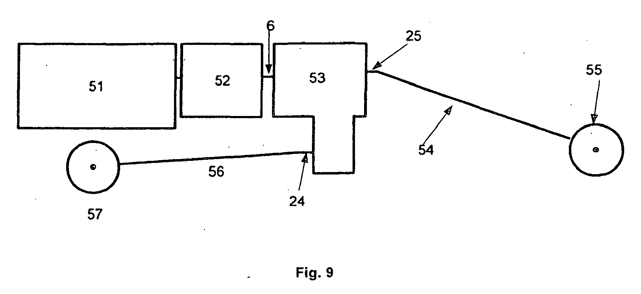

Fig. 9 zeigt einen möglichen Aufbau eines Antriebsstranges, bei dem der Motor (51) als längseingebauter Frontmotor aufgebaut und das Fahrzeug, insbesondere Kraftfahrzeug, mit einem Allradantrieb ausgebildet ist. Das erfindungsgemäße Verteilergetriebe (53) kann auch in Alleinstellung bzw. in Kombination mit beliebigen Antrieben verwendet werden, um ein anliegendes Drehmoment zwischen zumindest zwei Achsen (55, 57) aufzuteilen. So kann es beispielsweise bei einem dreiachsigen Fahrzeug auch dazu dienen, ein anliegendes Drehmoment zwischen einer ersten und den übrigen Achse(n) zu verteilen. Auch Drehmomente von Abtriebswellen eines Elektromotors können verteilt werden. Das erfindungsgemäße Verteilergetriebe kann prinzipiell auch bei stationären Maschinen eingesetzt werden, bei denen eine Momentaufteilung in der erfindungsgemäßen Weise erfolgen soll.

An den Motor (51), z.B. Verbrennungsmotor, Elektromotor, ist ein Getriebe (52) angeschlossen, an das ein erfindungsgemäßes Verteilergetriebe (53) angeschlossen ist. An sich kann das Verteilergetriebe (53) auch direkt an den Motor (51) angeschlossen sein. Mit dem erfindungsgemäßen Verteilergetriebe (53) kann die Anzahl der verfügbaren Gänge bzw. der vom Getriebe (52) bzw. vom Motor (51) erhaltenen unterschiedlichen Drehmomente verdoppelt werden.

Das erfindungsgemäße Verteilergetriebe weist eine Eingangswelle (6) auf, eine dazu koaxiale hintere Ausgangswelle (25) und eine versetzte vordere Ausgangswelle (24). Die Mittelachse der vordere Ausgangswelle (24) kann insbesondere parallel, aber auch schneidend oder windschief zur Mittelachse der Eingangswelle (6) verlaufen.

Von der hinteren Ausgangswelle (25) des erfindungsgemäßen Verteilergetriebe (51) erfolgt, in der Regel über eine Kardanwelle (54), der Antrieb auf zumindest eine Achse (55), insbesondere Hinterachse, an die die Kardanwelle (54) kraftübertragungsmäßig angeschlossen ist. Das Verteilergetriebe (53) treibt des weiteren eine weitere Achse (57) an, insbesondere eine Vorderachse, die über eine Kardanwelle oder Gleichlaufgelenkwelle (56) antriebsmäßig mit der vorderen Ausgangswelle (24) des erfindungsgemäßen Verteilergetriebes verbunden ist.

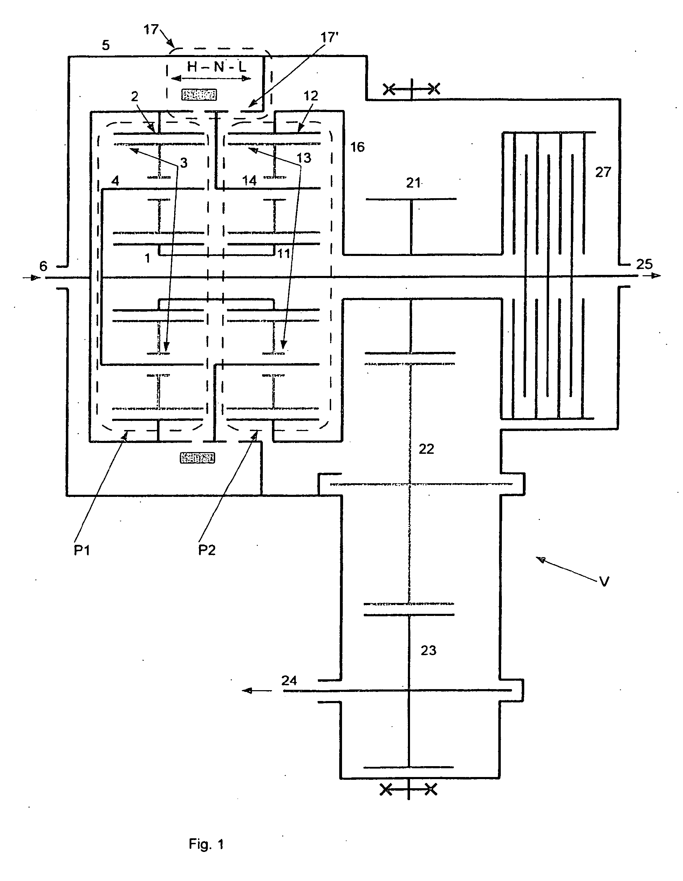

Fig. 1 bis Fig. 6 zeigen schematisch Ausgestaltungsformen des erfindungsgemäßen Verteilergetriebes. Das Verteilergetriebe besitzt eine Eingangswelle (6), eine dazu koaxiale hintere Ausgangswelle (25), zwei zur Einangsgangswelle (6) koaxiale Planetenradsätze (P1, P2) und eine achsversetzte vordere Ausgangswelle (24), die über ein Versatzgetriebe (V), vorzugsweise ein Stirnradgetriebe (21, 22, 23) oder ein Zahnkettengetriebe (21b, 22b, 23b) angetrieben wird.

In Abhängigkeit davon, wie sich die Planetenradsätze (P1, P2) räumlich zum Versatzgetriebe (V), insbesondere Stirnradgetriebe (21, 22, 23) oder Zahnkettengetriebe (21b, 22b, 23b) angeordnet sind, ergeben sich insgesamt 6 Ausgestaltungsformen. Die in Fig. 1 bis Fig. 6 dargestellten Ausgestaltungsformen haben übereinstimmende Getriebeelemente, deren Verschaltung untereinander gleich ist, sie sind kinematisch gleichwertig und unterscheiden sich primär darin, wie die einzelnen Getriebeelemente innerhalb des Gehäuses (5) angeordnet sind. Welche der möglichen Ausgestaltungsformen am günstigsten ist, hängt auch vom Fahrzeug ab. Abhängig von den vorliegenden Bauraumverhältnissen kann es besser sein, die vordere Abtriebswelle (24) weiter vorne oder weiter hinten zu positionieren.

Der erste Planetenradsatz (P1) besteht aus dem Hohlrad (2), dem Planetenträger (4), dem Sonnenrad (1) und mehreren Planetenrädern (3).

Der zweite Planetenradsatz (P2) besteht aus dem Hohlrad (12), dem Planetenträger (14), dem Sonnenrad (11) und mehreren Planetenrädern (13).

Die Eingangswelle (6) ist mit dem Hohlrad (2) antriebsmäßig verbunden. Das Hohlrad (2) kämmt mit mehreren Planetenrädern (3), die im Planetenträger (4) drehbar gelagert sind. Die Planetenräder (3) kämmen zusätzlich mit dem Sonnenrad (1). Der Planetenträger (4) ist mit der hinteren Ausgangswelle (25) antriebsmäßig verbunden.

Das Sonnenrad (1) ist mit einem weiteren Sonnenrad (11) verbunden bzw. einstückig ausgeführt. Das Sonnenrad (11) kämmt mit mehreren Planetenrädern (13), die im Planetenträger (14) drehbar gelagert sind. Die Planetenräder (13) kämmen zusätzlich mit dem Hohlrad (12). Das Hohlrad (12) kann direkt oder über eine Zwischenwelle (16) mit dem Abtriebsrad (21) verbunden sein. Der Planetenträger (14) kann über die in den Figuren dargestellten Verschaltung (17), vorzugsweise eine schaltbare Schiebemuffe, entweder mit der Eingangwelle (6) antriebsmäßig verbunden werden (Straßengangstellung H) oder eine Neutralposition einnehmen (Position N), oder mit dem Gehäuse (5) des Verteilergetriebes antriebsmäßig verbunden werden (Geländegangstellung L).

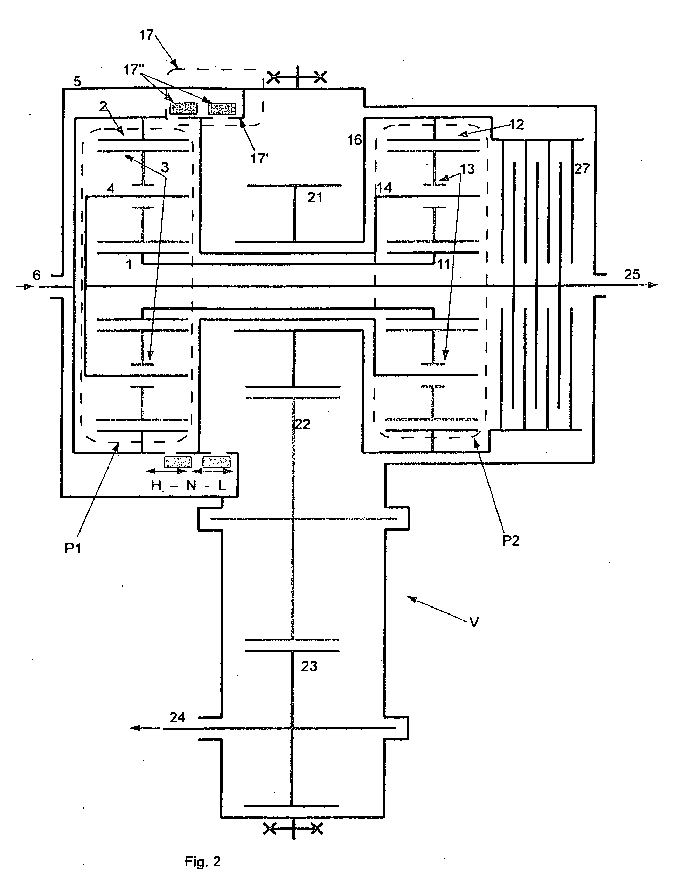

Die Ausbildung dieser Verschaltung (17) ist verschiedenartig möglich. Beispielsweise können schaltbare Kupplungen vorgesehen sein. Vorzugsweise wird eine Schiebemuffe eingesetzt, so wie diese in Fig. 1 dargestellt ist. Diese Schiebemuffe ist auf dem Planetenträger (14) sowie auf dem Hohlrad (2) sowie auf einer Verbindung (17') zum Gehäuse in Form einer Schaltmuffe verschiebbar gelagert. In einer Stellung, in der die Schaltmuffe zur Gänze in eine Neutralstellung auf das Hohlrad (2) aufgeschoben ist, verbleiben der Planetenträger (14) und die Verbindung (17') zum Gehäuse frei. Bei einer entsprechenden Verschiebung in eine Position H erfolgt eine Verkupplung des Hohlrades (2) mit dem Planetenträger (14). Bei einer weiteren Verschiebung der Schaltmuffe (17) in die Stellung N liegt die Neutralstellung vor, bei der ebenfalls der Planetenträger (14) sowie das Hohlrad (2) und die Verbindung (17') zum Gehäuse unverkuppelt bzw. frei verbleiben. Bei einer weiteren Verstellung der Schaltmuffe (17) nach rechts in die Stellung L erfolgt eine Verkupplung des Planetenträgers (14) mit der Verbindung (17') zum Gehäuse (5). Es kann vorgesehen sein, dass die Schaltmuffe (17) noch weiter auf die Verbindung (17') aufgeschoben werden kann, sodass sich eine Neutralstellung ergibt. In vergleichbarer Weise kann eine Verkupplung mit zwei getrennt schaltbaren Kupplungen (17") erfolgen, so wie dies in Fig. 2 dargestellt ist. Jede der beiden angedeuteten Kupplungen (17") kann in eine Freigabestellung oder in eine Kupplungsstellung verbracht werden. Die links dargestellte Kupplung (17") verkuppelt in Eingriffsstellung das Hohlrad (2) mit dem Planetenträger (14). Sind beide Kupplungen außer Eingriff, so liegt eine Neutralstellung vor. Ist die rechte Kupplung (17") in Eingriff, so ist der Planetenträger (14) mit der Verbindung (17') zum Gehäuse (5) verkuppelt. Sind beide Kupplungen (17") in Eingriff, dann kann die Funktionalität einer Parksperre dargestellt werden:

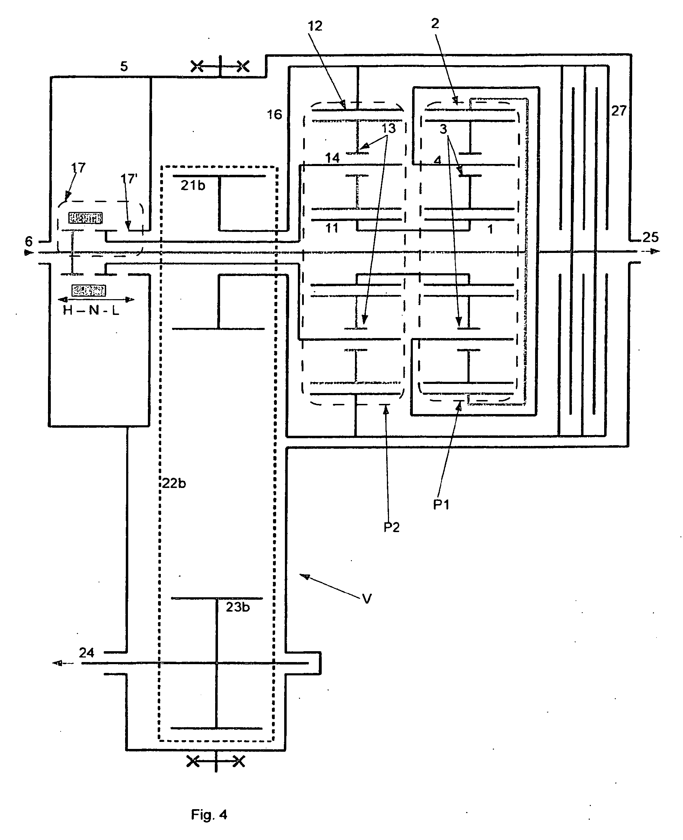

In Fig. 1, Fig. 2 und Fig. 3 überträgt das Abtriebsrad (21) das Drehmoment über zwei weitere Zahnräder (22,23) auf die vordere Abtriebswelle (24). Selbstverständlich kann alternativ wie in Fig. 4, Fig. 5 und Fig. 6 dargestellt der erforderliche Achsversatz zwischen vorderer Abtriebswelle (24) und Eingangswelle (6) auch realisiert werden mit einem Zahnkettengetriebe, bestehend einem oberen Kettenrad (21 b), einer Zahnkette (22b) und einem unteren Kettenrad (23b).

Die Sperrkupplung (27) weist zwei Anschlüsse auf, wobei ein Anschluss mit der Ausgangswelle (25) verbunden ist und der zweite Anschluss über die Zwischenwelle (16) mit dem Abtriebsrad (21) bzw. dem oberen Kettenrad (21 b) verbunden ist.

Vorteilhafterweise ist bei den Ausgestaltungsformen nach Fig. 1 bis Fig. 6 eine äußere, unmittelbare, direkte Betätigung der Sperrkupplung (27) und der vorzugsweise von einer Schaltmuffe gebildeten Verschaltung (17) möglich, sodass es nicht notwendig ist, beispielsweise Drucköl mit hohem Aufwand als Betätigungsmedium durch rotierende Wellen hindurch zu führen.

Bei dem in Fig. 1 schematisch dargestellte Verteilergetriebe dargestellten Verteilergetriebe liegt die vordere Ausgangswelle (24) weit hinten und wird über Stirnräder (21,22,23) angetrieben. Der erste Planetenradsatz (P1) liegt vor dem zweiten Planetenradsatz (P2), das Abtriebsrad (21) liegt dahinter. Der erste Planetenradsatz (P1) ist vor dem zweiten Planetenradsatz (P2) angeordnet, das obere Kettenrad (21b) oder das obere Abtriebszahnrad (21) liegt hinter dem zweiten Planetenradsatz (P2), die vordere Seite des Planetenträgers (4) ist mit der hinteren Ausgangswelle (25) verbunden, die miteinander verbundenen Sonnenräder (1, 11) liegen als Hohlkörper auf größerem Durchmesser als die hinteren Ausgangswelle (25), die Zwischenwelle (16) liegt als Hohlwelle auf größerem Durchmesser als die hinteren Ausgangswelle (25) und die vordere Seite des Planetenträgers (14) ist mit dem Gehäuse (5) oder mit dem Hohlrad (2) oder in einer Neutralstellung verschaltbar. Bei dem in Fig. 1 dargestellten Verteilergetriebe ergibt sich eine sehr lange hintere Abtriebswelle (25), wodurch Abstützmomente aus der Kardanwelle (54) über eine breite Lagerbasis in das Gehäuse (5) eingeleitet werden können.

Fig. 2 zeigt schematisch eine zweite Ausführungsform, bei der die vordere Ausgangswelle (24) in der Mitte positioniert ist. Dabei ist vorgesehen, dass der erste Planetenradsatz (P1) vor dem oberen Kettenrad (21b) bzw. Abtriebszahnrad (21) angeordnet ist, der zweite Planetenradsatz (P2) hinter dem oberen Kettenrad (21 b) bzw. Abtriebszahnrad (21) liegt, die vordere Seite des Planetenträgers (4) mit der hinteren Ausgangswelle (25) verbunden ist, die miteinander verbundenen Sonnenräder (1, 11) als Hohlkörper auf größerem Durchmesser als die hinteren Ausgangswelle (25) liegen, die vordere Seite des Planetenträgers (14) als Hohlwelle auf größerem Durchmesser als die Sonnenräder (1,11) zur Verschaltung (17) geführt ist, die Zwischenwelle (16) als Hohlwelle auf größerem Durchmesser als die Verbindung zwischen Verschaltung (17) und Planetenträger (14) liegt und die vordere Seite des Planetenträgers (14) mit dem Gehäuse (5) und/oder mit dem Hohlrad (2) oder in einer Neutralstellung verschaltbar ist. Gegenüber Fig. 1 ändert sich die innere Anordnung der Bauelemente, jedoch bleiben Verschaltung und Funktionsweise bestehen. Die vordere Ausgangswelle (24) wird über ein Versatzgetriebe, bestehend aus Stirnrädern (21, 22, 23) angetrieben. Der erste Planetenradsatz (P1) liegt vor dem Abtriebsrad (21), der zweite Planetenradsatz (P2) liegt dahinter.

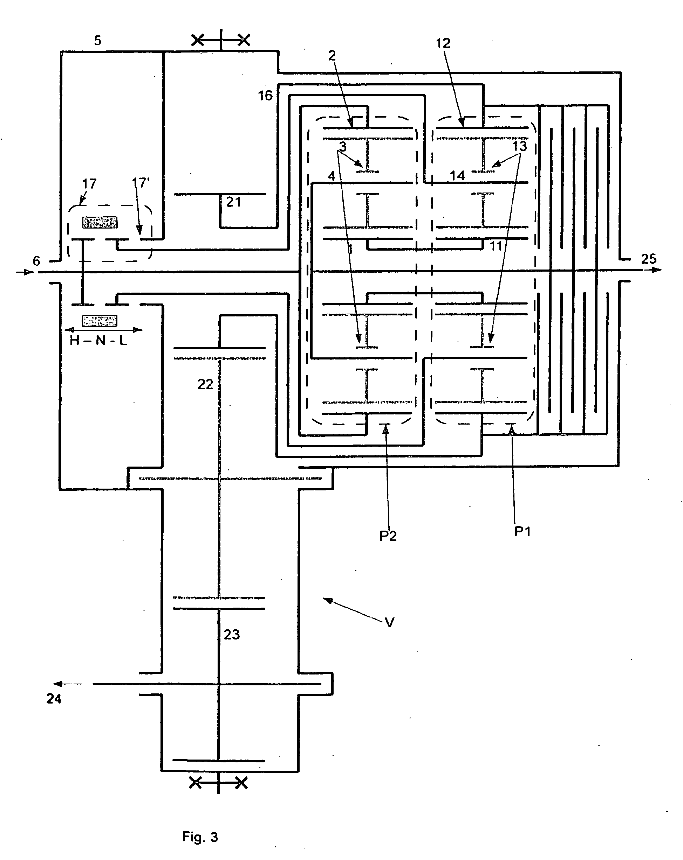

Fig. 3 zeigt schematisch eine dritte Ausführungsform, bei der die vordere Ausgangswelle (24) ganz vorne positioniert ist. Es ist vorgesehen, dass das obere Kettenrad (21 b) bzw. Abtriebszahnrad (21) vor dem ersten Planetenradsatz (P1) angeordnet ist, der zweite Planetenradsatz (P2) hinter dem oberen Kettenrad (21b) bzw. Abtriebszahnrad (21) liegt, die vordere Seite des Planetenträgers (4) mit der hinteren Ausgangswelle (25) verbunden ist, die miteinander verbundenen Sonnenräder (1, 11) als Hohlkörper auf größerem Durchmesser als die hinteren Ausgangswelle (25) liegen, die vordere Seite des Planetenträgers (14) auf größerem Durchmesser über das Hohlrad (2) und der Eingangswelle (6) zur Verschaltung (17) geführt ist, die Zwischenwelle (16) als Hohlwelle auf größerem Durchmesser als die Verbindung zwischen Verschaltung (17) und Planetenträger (14) liegt und die vordere Seite des Planetenträgers (14) mit dem Gehäuse (5) oder mit dem Hohlrad (2) oder in einer Neutralstellung verschaltbar ist. Gegenüber Fig. 1 ändert sich die innere Anordnung der Bauelemente, jedoch bleiben Verschaltung und Funktionsweise bestehen. Die vordere Ausgangswelle (24) wird über ein Versatzgetriebe, bestehend aus Stirnrädern (21, 22, 23) angetrieben. Das Abtriebsrad (21) liegt vor dem ersten Planetenradsatz (P1), der zweite Planetenradsatz (P2) liegt dahinter.

Fig. 4 zeigt schematisch eine vierte Ausführungsform, bei der die vordere Ausgangswelle (24) ganz vorne positioniert ist. Es ist vorgesehen, dass das obere Kettenrad (21b) bzw. Abtriebszahnrad (21) vor dem zweiten Planetenradsatz (P2) angeordnet ist, der erste Planetenradsatz (P1) hinter dem zweiten Planetenradsatz (P2) liegt, die miteinander verbundenen Sonnenräder (1, 11) als Hohlkörper auf größerem Durchmesser als die Eingangswelle (6) liegen, die Verbindung zwischen der vorderen Seite des Planetenträgers (14) und der Verschaltung (17) als Hohlwelle auf größerem Durchmesser als die Eingangwelle (6) ausgeführt ist, die Zwischenwelle (16) als Hohlwelle auf größerem Durchmesser als die Verbindung zwischen der vorderen Seite des Planetenträgers (14) und der Verschaltung (17) liegt, die vordere Seite des Planetenträgers (4) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist. Gegenüber Fig. 1 ändert sich die innere Anordnung der Bauelemente, jedoch bleiben Verschaltung und Funktionsweise bestehen. Die vordere Ausgangswelle (24) wird über ein Zahnkettengetriebe, bestehend aus einem oberen Kettenrad (21b), einer Zahnkette (22b) und einem unteren Kettenrad (23b), angetrieben. Das obere Kettenrad (21b) liegt vor dem zweiten Planetenradsatz (P2), der erste Planetenradsatz (P1) liegt dahinter.

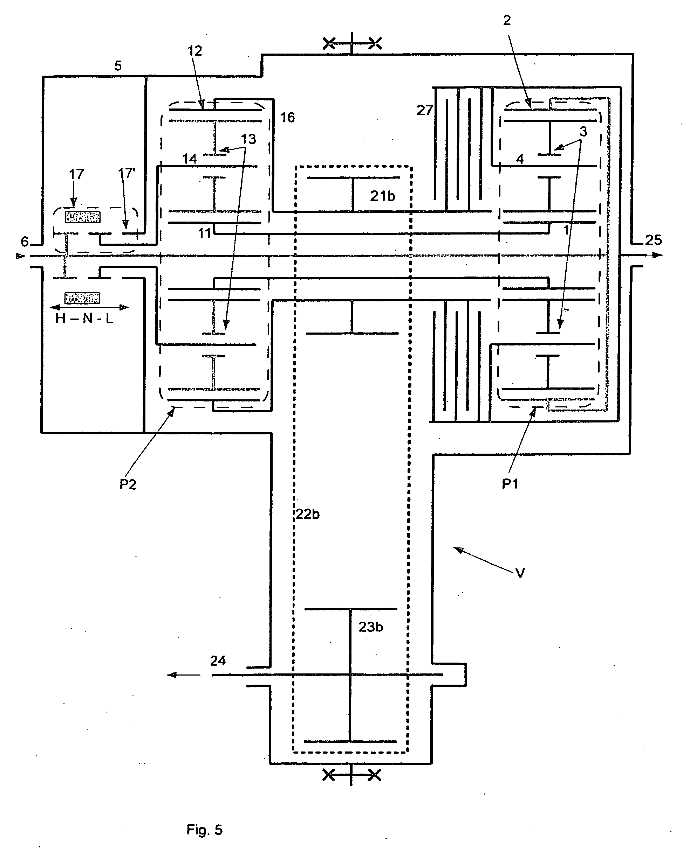

Fig. 5 zeigt eine fünfte Ausgestaltungsform, bei der die vordere Ausgangswelle (24) in der Mitte positioniert ist. Es ist vorgesehen, dass der zweite Planetenradsatz (P2) vor dem oberen Kettenrad (21b) bzw. Abtriebszahnrad (21) angeordnet ist, der erste Planetenradsatz (P1) hinter dem oberen Kettenrad (21b) bzw. Abtriebszahnrad (21) liegt, die miteinander verbundenen Sonnenräder (1, 11) als Hohlkörper auf größerem Durchmesser als die Eingangswelle (6) liegen, die Zwischenwelle (16) als Hohlwelle auf größerem Durchmesser als die Eingangswelle (6) und die Sonnenräder (1, 11) liegt, die vordere Seite des Planetenträgers (4) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist. Gegenüber Fig. 1 ändert sich die innere Anordnung der Bauelemente, jedoch bleiben Verschaltung und Funktionsweise bestehen. Die vordere Ausgangswelle (24) wird über ein Zahnkettengetriebe bestehend aus einem oberen Kettenrad (21b), einer Zahnkette (22b) und einem unteren Kettenrad (23b) angetrieben. Der zweite Planetenradsatz (P2) liegt vor dem oberen Kettenrad (23b), der erste Planetenradsatz (P1) liegt dahinter.

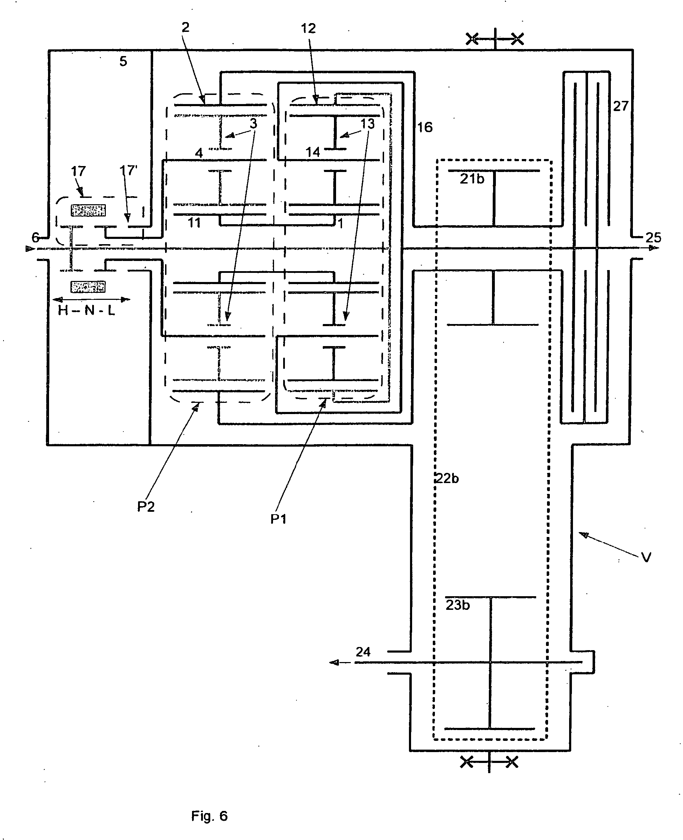

Fig. 6 zeigt eine sechste Ausgestaltungsform, bei der die vordere Abtriebswelle (24) ganz hinten positioniert ist. Es ist vorgesehen, dass der zweite Planetenradsatz (P2) vor dem ersten Planetenradsatz (P1) angeordnet ist, das obere Kettenrad (21b) bzw. Abtriebszahnrad (21) hinter dem ersten Planetenradsatz (P1) liegt, die miteinander verbundenen Sonnenräder (1, 11) als Hohlkörper auf größerem Durchmesser als die Eingangswelle (6) liegen, die Verbindung zwischen der vorderen Seite des Planetenträgers (4) und der hinteren Ausgangswelle (25) als Hohlwelle auf größerem Durchmesser als das Hohlrad (2) liegt, die vordere Seite des Planetenträgers (14) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist. Gegenüber Fig. 1 ändert sich die innere Anordnung der Elemente, jedoch bleiben Verschaltung und Funktionsweise bestehen. Die vordere Ausgangswelle (24) wird über ein Zahnkettengetriebe bestehend aus einem oberen Kettenrad (21b), einer Zahnkette (22b) und einem unteren Kettenrad (23b), angetrieben. Der zweite Planetenradsatz (P2) liegt vor dem ersten Planetenradsatz (P1), das obere Kettenrad (23b) liegt dahinter.

Selbstverständlich ist es möglich, die in Fig. 1, Fig. 2 und Fig. 3 dargestellten Versteilergetriebe mit einem Zahnkettengetriebe (21b, 22b, 23b) anstatt der Zahnräder (21, 22, 23) auszuführen. Ebenso ist es möglich die Ausgestaltungsformen nach Fig. 4, Fig. 5 und Fig. 6 mit Zahnrädern (21,22,23) anstatt einem Zahnkettengetriebe (21 b,22b,23b) auszuführen.

Weiters ist es möglich, die Verschaltung (17) des in Fig. 2 dargestellten Verteilergetriebes analog zu Fig. 1 und Fig. 3 bis Fig. 6 auszuführen. Die Verschaltung (17) nach Fig. 2 kann selbstverständlich auch bei den Verteilergetrieben nach Fig. 1 und Fig. 3 bis Fig. 6 angewendet werden:

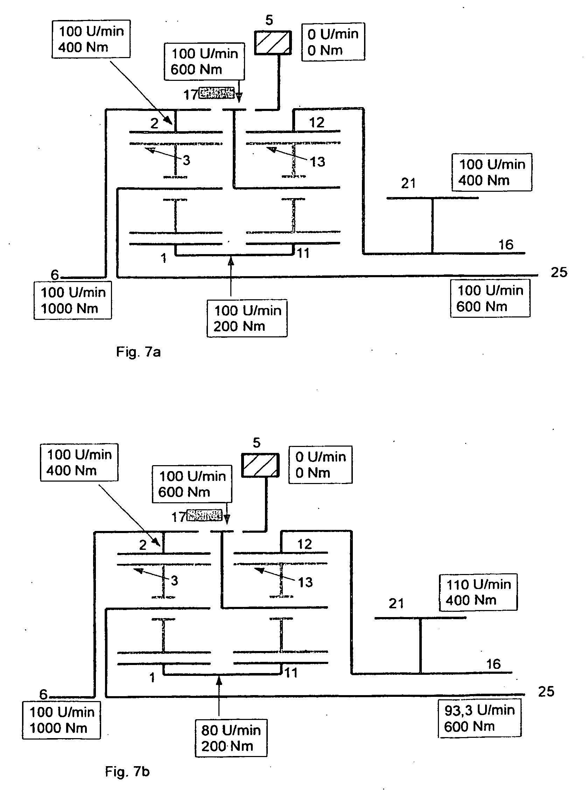

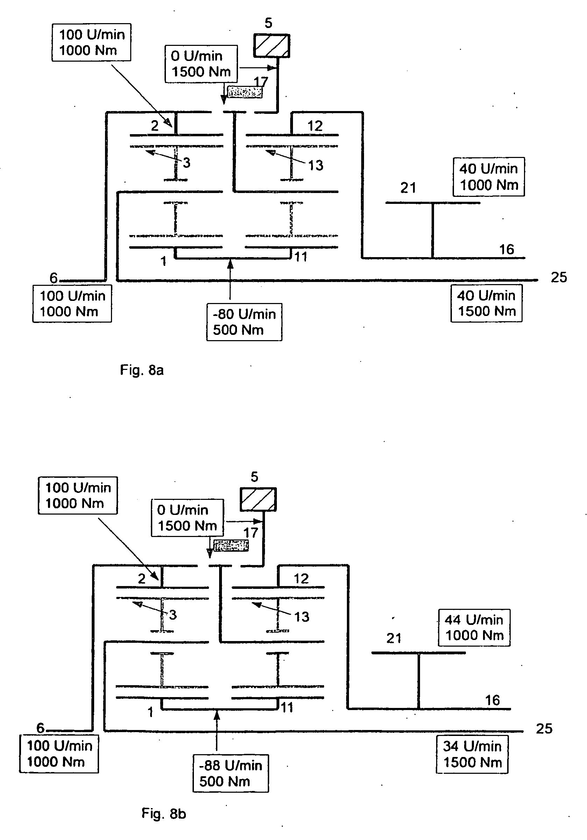

Fig. 7a, 7b, 8a, 8b zeigen beispielhaft im Verteilergetriebe bei unterschiedlichen Betriebszuständen vorliegende Drehzahlen und Drehmomente. Hierbei werden folgende Annahmen getroffen: das Eingangsdrehmoment liege bei 1000 Nm, die Eingangsdrehzahl betrage 100 U/min, die Standübersetzungen seien $i_{P1} = i_{P2} = -2$, Reibungsverluste werden vernachlässigt und bei den Drehmomenten ist stets der Betrag angegeben.

Fig. 7a und Fig. 7b zeigen das Verteilergetriebe bei geschaltetem Straßengang. Das von der Eingangswelle (6) eingeleitete Drehmoment wird teilweise über das Hohlrad (2) des ersten Planetenradsatzes (P1) eingeleitet und zusätzlich über die Schaltmuffe (17) auf den Planetenträger des zweiten Planetenradsatzes (P2). Durch diese Verzweigung können die Zahnkräfte und die auf die Verschaltung (17), insbesondere Schaltmuffe, wirkenden Beanspruchungen gering gehalten werden.

Fig. 7a zeigt den Betrieb im Straßengang ohne Differenzdrehzahlen zwischen Vorder- und Hinterachse. Erkennbar ist, dass es in beiden Planetenradsätzen (P1, P2) zu keinem Abwälzen der Verzahnungen kommt.

Fig. 7b zeigt den Betrieb im Straßengang mit einer beispielhaft angenommenen Differenzdrehzahl. Die Drehzahlunterschiede bewirken ein Abwälzen in beiden Planetenradsätzen (P1, P2)

Fig. 8a und Fig. 8b zeigen das Verteilergetriebe bei geschaltetem Geländegang. Das von der Eingangswelle (6) eingeleitete Drehmoment wird vollständig auf das Hohlrad (2) des ersten Planetenradsatzes eingeleitet. Die Sonnenräder (1, 11) drehen sich entgegen der Drehrichtung der Eingangswelle (6). Das zweite Planetengetriebe (P2) wandelt Drehzahlen und Drehmoment der Sonnenräder (1, 11) derart um, dass vom Hohlrad (12) des zweiten Planetenradsatzes (P2) ein gegenüber dem Sonnenrad (11) erhöhtes Antriebsmoment abgenommen werden kann.

Fig. 8a zeigt den Betrieb im Geländegang ohne Differenzdrehzahlen zwischen Vorder- und Hinterachse. Erkennbar ist, dass beide Planetenradsätze abwälzen.

Fig. 8b zeigt den Betrieb im Geländegang mit einer beispielhaft angenommenen Differenzdrehzahl. Durch die Drehzahlunterschiede verändert sich zusätzlich die Drehzahl der Sonnenräder (1, 11)

Prinzipiell könnte die Zwischenwelle (16) auch entfallen und das Stirnrad (21) bzw. Kettenrad (21b) mit dem Hohlrad (12), gegebenenfalls einstückig, verbunden sein.

Unter Verzahnungsdaten werden vor allem Zähnezahl, Schrägungswinkel, Normaleingriffswinkel und Normalmodul verstanden, sodass gleiche Verzahnungsdaten besitzende Zahnräder gleich wirken bzw. gleiche Momente übertragen und prinzipiell mit gleichen Verzahnungswerkzeugen herstellbar sind.

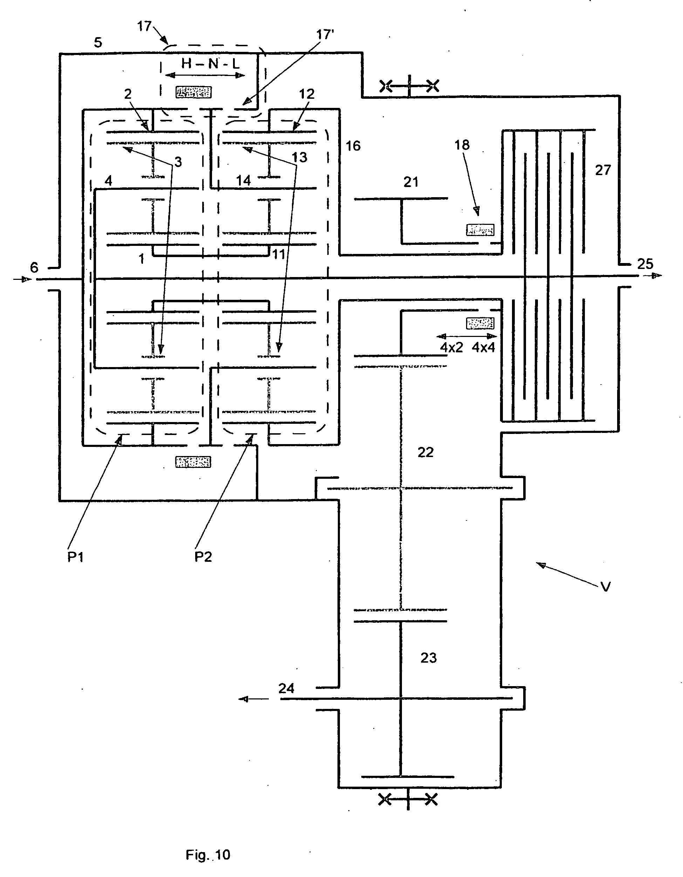

Fig. 10 zeigt ein Verteilergetriebe mit einem Aufbau entsprechend Fig. 1. Bei dieser Ausführungsform sowie bei sämtlichen weiteren erfindungsgemäßen Ausgestaltungen ist es möglich, den Allradantrieb zuzuschalten bzw. wegzuschalten. Dazu ist eine Schalteinheit (18) vorgesehen, mit der das Abtriebsrad (21) bzw. das Kettenrad (21b) mit der Zwischenwelle (16) verschaltbar ist. Als Schaltkupplung ist es möglich, eine schaltbare Kupplung vorzusehen oder eine Schaltmuffe (18), die auf dem Abtriebsrad (21) bzw. dem Kettenrad (21b) verschiebbar gelagert ist und mit einem Verbindungsteil der Zwischenwelle in Eingriff bringbar ist. Bei weggeschaltetem Allradantrieb wird gleichzeitig die Sperrkupplung (27) betätigt, um das gesamte Antriebsmoment auf die hintere Ausgangswelle (25) zu leiten.

**Patentansprüche**

1. Verteilergetriebe mit einem Gehäuse (5), einer Eingangswelle (6), einer hinteren Ausgangswelle (25), einer vorderen Ausgangswelle (24) und zwei Planetengetrieben (P1, P2),
   wobei die hintere Ausgangswelle (25) koaxial zur Eingangswelle (6) ist,
   wobei die vordere Ausgangswelle (24) gegenüber der Eingangswelle (6) versetzt ist,
   wobei die beiden Planetengetriebe (P1, P2) koaxial zur Eingangswelle (6) liegen,
   wobei das erste Planetengetriebe (P1) ein einfacher Planetenradsatz ist und aus einem Hohlrad (2), einem Sonnenrad (1), einem Planetenträger (4) und mehreren darin drehbar gelagerten Planetenrädern (3) besteht,
   wobei das zweite Planetengetriebe (P2) ein einfacher Planetenradsatz ist und aus einem Hohlrad (12), einem Sonnenrad (11), einem Planetenträger (14) und mehreren darin drehbar gelagerten Planetenrädern (13) besteht,
   **dadurch gekennzeichnet,**
   **dass** die Eingangswelle (6) mit dem Hohlrad (2) verbunden ist,
   **dass** die hintere Ausgangswelle (25) mit dem Planetenträger (4) verbunden ist,
   **dass** das Hohlrad (12) antriebsmäßig, gegebenenfalls über eine Zwischenwelle (16), mit einem auf die vordere Ausgangswelle (24) einwirkenden Versatzgetriebe (V) verbunden ist,
   **dass** das Sonnenrad (1) des ersten Planetengetriebes (P1) mit dem Sonnenrad (11) des zweiten Planetengetriebes (P2) verbunden oder mit diesem einstückig ausgeführt ist, und dass der Planetenträger (14) mit dem Gehäuse (5) und/oder mit dem Hohlrad (2) über eine Verschaltung (17) verschaltbar ist oder eine Neutralstellung einnimmt.

2. Verteilergetriebe nach Anspruch 1, **dadurch gekennzeichnet, dass** das Versatzgetriebe (V) als Zahnkettengetriebe, umfassend ein oberes Kettenrad (21 b), eine Zahnkette (22b) und ein unteres Kettenrad (23b), ausgeführt ist.

3. Verteilergetriebe nach Anspruch 1, **dadurch gekennzeichnet, dass** das Versatzgetriebe (V) als Getriebe mit Stirnrädern (21, 22, 23) ausgeführt ist.

4. Verteilergetriebe nach einem der Ansprüche 1 bis 3, **dadurch gekennzeichnet, dass** eine Sperrkupplung (27) vorgesehen ist, mit der die hintere Ausgangswelle (25) mit der Zwischenwelle (16) und/oder dem Hohlrad (12) und/oder dem Stirnrad (21) und oder dem Kettenrad (21 b) verbindbar ist.

5. Verteilergetriebe nach einem der Ansprüche 1-4, **dadurch gekennzeichnet, dass** die Sperrkupplung (27) ausgeführt ist als steuerbare, in ihrem Drehmomentübertragungsverhalten abstufbare Reibungskupplung oder als eine mit Federkraft vorgespannte Reibungskupplung oder als Flüssigkeitsreibungskupplung oder als schaltbare formschlüssige Klauenkupplung bzw. Zahnkupplung.

6. Verteilergetriebe nach einem der Ansprüche 1-5, **dadurch gekennzeichnet, dass** die Verschaltung (17) des Planetenträgers (4) mit dem Gehäuse (5) und/ oder die Verschaltung des Planetenträgers (4) mit dem Hohlrad (2) synchronisiert ist.

7. Verteilergetriebe nach einem der Ansprüche 1-6, **dadurch gekennzeichnet, dass** die beiden Sonnenräder (1, 11) mit identen Verzahnungsdaten und/ oder einstükkig ausgeführt sind und/oder die Planetenräder (3, 13) identisch ausgeführt sind und/oder die Hohlräder (2, 12) mit identen Verzahnungsdaten und/oder die Planetenträger (4, 14) identisch ausgeführt sind.

8. Verteilergetriebe nach einem der Ansprüche 1-7, **dadurch gekennzeichnet, dass** der erste Planetenradsatz (P1) vor dem zweiten Planetenradsatz (P2) angeordnet ist, das obere Kettenrad (21b) oder das obere Abtriebszahnrad (21) hinter dem zweiten Planetenradsatz (P2) liegt, die vordere Seite des Planetenträgers (4) mit der hinteren Ausgangswelle (25) verbunden ist, die miteinander verbundenen Sonnenräder (1, 11) als Hohlkörper auf größerem Durchmesser als die hinteren Ausgangswelle (25) liegen, die Zwischenwelle (16) als Hohlwelle auf größerem Durchmesser als die hinteren Ausgangswelle (25) liegt und die vordere Seite des Planetenträgers (14) mit dem Gehäuse (5) oder mit dem Hohlrad (2) oder in einer Neutralstellung verschaltbar ist.

9. Verteilergetriebe nach einem der Ansprüche 1-7, **dadurch gekennzeichnet, dass** der erste Planetenradsatz (P1) vor dem oberen Kettenrad (21 b) bzw. Abtriebszahnrad (21) angeordnet ist, der zweite Planetenradsatz (P2) hinter dem oberen Kettenrad (21 b) bzw. Abtriebszahnrad (21) liegt, die vordere Seite des Planetenträgers (4) mit der hinteren Ausgangswelle (25) verbunden ist, die miteinander verbundenen Sonnenräder (1, 11) als Hohlkörper auf größerem Durchmesser als die hinteren Ausgangswelle (25) liegen, die vordere Seite des Planetenträgers (14) als Hohlwelle auf größerem Durchmesser als die Sonnenräder (1,11) zur Verschaltung (17) geführt ist, die Zwischenwelle (16) als Hohlwelle auf größerem Durchmesser als die Verbindung zwischen Verschaltung (17) und Planetenträger (14) liegt und die vordere Seite des Planetenträgers (14) mit dem Gehäuse (5) oder mit dem Hohlrad (2) oder in einer Neutralstellung verschaltbar ist.

10. Verteilergetriebe nach einem der Ansprüche 1-7, **dadurch gekennzeichnet, dass** das obere Kettenrad (21 b) bzw. Abtriebszahnrad (21) vor dem ersten Planetenradsatz (P1) angeordnet ist, der zweite Planetenradsatz (P2) hinter dem oberen Kettenrad (21 b) bzw. Abtriebszahnrad (21) liegt, die vordere Seite des Planetenträgers (4) mit der hinteren Ausgangswelle (25) verbunden ist, die miteinander verbundenen Sonnenräder (1, 11) als Hohlkörper auf größerem Durchmesser als die hinteren Ausgangswelle (25) liegen, die vordere Seite des Planetenträgers (14) auf größerem Durchmesser über das Hohlrad (2) und der Eingangswelle (6) zur Verschaltung (17) geführt ist, die Zwischenwelle (16) als Hohlwelle auf größerem Durchmesser als die Verbindung zwischen Verschaltung (17) und Planetenträger (14) liegt und die vordere Seite des Planetenträgers (14) mit dem Gehäuse (5) oder mit dem Hohlrad (2) oder in einer Neutralstellung verschaltbar ist.

11. Verteilergetriebe nach einem der Ansprüche 1-7, **dadurch gekennzeichnet, dass** das obere Kettenrad (21 b) bzw. Abtriebszahnrad (21) vor dem zweiten Planetenradsatz (P2) angeordnet ist, der erste Planetenradsatz (P1) hinter dem zweiten Planetenradsatz (P2) liegt, die miteinander verbundenen Sonnenräder (1, 11) als Hohlkörper auf größerem Durchmesser als die Eingangswelle (6) liegen, die Verbindung zwischen der vorderen Seite des Planetenträgers (14) und der Verschaltung (17) als Hohlwelle auf größerem Durchmesser als die Eingangwelle (6) ausgeführt ist, die Zwischenwelle (16) als Hohlwelle auf größerem Durchmesser als die Verbindung zwischen der vorderen Seite des Planetenträgers (14) und der Verschaltung (17) liegt, die vordere Seite des Planetenträgers (4) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist.

12. Verteilergetriebe nach einem der Ansprüche 1-7, **dadurch gekennzeichnet, dass** der zweite Planetenradsatz (P2) vor dem oberen Kettenrad (21 b) bzw. Abtriebszahnrad (21) angeordnet ist, der erste Planetenradsatz (P1) hinter dem oberen Kettenrad (21 b) bzw. Abtriebszahnrad (21) liegt, die miteinander verbundenen Sonnenräder (1, 11) als Hohlkörper auf größerem Durchmesser als die Eingangswelle (6) liegen, die Zwischenwelle (16) als Hohlwelle auf größerem Durchmesser als die Eingangswelle (6) und die Sonnenräder (1, 11) liegt, die vordere Seite des Planetenträgers (4) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist.

13. Verteilergetriebe nach einem der Ansprüche 1-7, **dadurch gekennzeichnet, dass** der zweite Planetenradsatz (P2) vor dem ersten Planetenradsatz (P1) angeordnet ist, das obere Kettenrad (21 b) bzw. Abtriebszahnrad (21) hinter dem ersten Planetenradsatz (P1) liegt, die miteinander verbundenen Sonnenräder (1, 11) als Hohlkörper auf größerem Durchmesser als die Eingangswelle (6) liegen, die Verbindung zwischen der vorderen Seite des Planetenträgers (4) und der hinteren Ausgangswelle (25) als Hohlwelle auf größerem Durchmesser als das Hohlrad (2) liegt, die vordere Seite des Planetenträgers (14) mit der hinteren Ausgangswelle (25) verbunden ist und die vordere Seite des Planetenträgers (14) mit dem Gehäuse (5) oder mit dem Hohlrad (2) oder in einer Neutralstellung verschaltbar ist.

14. Verteilergetriebe nach einem der Ansprüche 1-13, **dadurch gekennzeichnet, dass** die Verschaltung (17) von zumindest einer schaltbaren Kupplung, einer verschiebbaren Schaltmuffe oder zumindest einer formschlüssigen Kupplung gebildet ist.

15. Verteilergetriebe nach einem der Ansprüche 1-14, **dadurch gekennzeichnet, dass** eine Kupplungseinheit (18) vorgesehen ist, mit der die die antriebsmäßige Verbindung von Zwischenwelle (16) mit dem Antriebsrad (21) oder dem oberen Kettenrad (21b) wegschaltbar ist.

**Claims**

1. A transferbox comprising a housing (5), an input shaft (6), a rear output shaft (25), a front output shaft (24) and two planet gears (P1, P2),
said rear output shaft (25) being coaxial with said input shaft (6);
said front output shaft (24) being offset from said input shaft (6);
said two planet gears (P1, P2) being coaxial with said input shaft (6);
thefirst planet gear (P1) being a singleplanet gear train, consisting of a ring-gear (2), a sun gear (1), a planet carrier (4) and several planet wheels (3) which are rotatingly supported by said planet carrier (4),
the second planet gear (P2) being a single planet gear train, consisting of a ring gear (12), a sun gear (11), a planet carrier (14) and several planet wheels (13) which are rotatingly supported by said planet carrier (4),
**characterised in that**
the input shaft (6) is connected to the ring gear (2),
**in that** the rear output shaft (25) is connected to the planet carrier (4),
**in that** the ring gear (12) drives anoffset gear (V), optionally via an intermediate shaft (16), said offset gear (V) acting on the front output shaft (24),
**in that** the sun gear (1) of the first planet gear (P1) is connected to the sun gear (11) of the second planet gear (P2) or is formed integrally therewith, and **in that** the planet carrier (14) is engageable with the housing (5) and/or the ring gear (2) via a gearshift (17) or assumes a neutral position.

2. The transferbox according to claim 1, **characterised in that** said offset gear (V) is implemented as a sprocket chain gear, comprising an upper chain wheel (21 b), a sprocket chain (22b) and a lower chain wheel (23b).

3. The transferbox according to claim 1, **characterised in that** said offset gear (V) is implemented as a gear of spur wheels (21, 22, 23).

4. The transferbox according to any one of the claims 1 to 3, **characterised in that** a locking clutch (27), which may connect the rear output shaft (25) to the intermediate shaft (16) and/or the ring wheel (12) and/or the spur wheel (21) and/or the chain wheel (21 b), is provided.

5. The transferbox according to any one of the claims 1 to 4, **characterised in that** said locking clutch (27) is implemented as a controllable friction clutch having an adjustable torque transfer behaviour or as a friction clutch biased by a spring or as a liquid friction clutch or as a switchable, positive locking claw or denture clutch.

6. The transferbox according to any one of the claims 1 to 5, **characterised in that** the gearshift (17) of the planet carrier (4) and the housing (5) and/or the connection of the planet carrier (4) and the ring wheel (2) is/are synchronised.

7. The transferbox according to any one of the claims 1 to 6, **characterised in that** the two sun wheels (1, 11) have the same teeth characteristics and/or are integrally formed with one another and/or the planet wheels (3, 13) are identically implemented and/or the ring wheels (2, 12) have the same teeth characteristics and/or the planet carriers (4, 14) are identically implemented.

8. The transferbox according to any one of the claims 1 to 7, **characterised in that** the first planet gear (P1) is disposed in front of the second planet gear (P2), the upper chain wheel (21 b) or the upper driving gear wheel (21) is located behind the second planet gear (P2), the front side of the planet carrier (4) is connected to the rear output shaft (25), the connected sun wheels (1, 11) are hollow bodies positioned at a larger diameter than the rear output shaft (25), the intermediate shaft (16) is positioned as a hollow shaft at a larger diameter than the rear output shaft (25) and the front side of the planet carrier (14) is engageable with the housing (5) or with the ring wheel (2) or may be brought into a neutral position.

9. The transferbox according to any one of the claims 1 to 7, **characterised in that** the first planet gear (P1) is disposed in front of the upper chain wheel (21 b) or driving gear wheel (21), the second planet gear (P2) is located behind the upper chain wheel (21 b) or driving gear wheel (21), the front side of the planet carrier (4) is connected to the rear output shaft (25), the connected sun wheels (1, 11) are hollow bodies positioned at a larger diameter than the rear output shaft (25), the front side of the planet carrier (14) is a hollow shaft positioned at a larger diameter than the sun wheels (1, 11) and extends to the gearshift (17), the intermediate shaft (16) is a hollow shaft positioned at a larger diameter than the connection between the gearshift (17) and the planet carrier (14) and the front side of the planet carrier (14) is engageable with the housing (5) or the ring wheel (2) or may be brought into a neutral position.

10. The transferbox according to any one of the claims 1 to 7, **characterised in that** the upper chain wheel (21 b) or driving gear wheel (21) is located in front of the first planet gear (P1), the second planet gear (P2) is located behind the upper chain wheel (21 b) or driving gear wheel (21), the front side of the planet carrier (4) is connected to the rear output shaft (25), the connected sun wheels (1, 11) are hollow bodies positioned at a larger diameter than the rear output shaft (25), the front side of the planet carrier (14) has a larger diameter and extends via the ring wheel (2) and the input shaft (6) to the gearshift (17), the intermediate shaft (16) is a hollow shaft positioned at a larger diameter than the connection between the gearshift (17) and the planet carrier (14) and the front side of the planet carrier (1A) is engageable with the housing (5) or the ring wheel (2) or may be brought into a neutral position.

11. The transferbox according to any one of the claims 1 to 7, characterised in that the upper chain wheel (21 b) or driving gear wheel (21) is located in front of the second planet gear (P2), the first planet gear (P1) is located behind the second planet gear (P2), the connected sun wheels (1, 11) are hollow bodies positioned at a larger diameter than the input shaft (6), the connection between the front side of the planet carrier (14) and the gearshift (17) is a hollow shaft positioned at a larger diameter than the input shaft (6), the intermediate shaft (16) is a hollow shaft positioned at a larger diameter than the connection between the front side of the planet carrier (14) and the gearshift (17), the front side of the planet carrier (4) is connected to the rear output shaft (25) and the front side of the planet carrier (14) is engageable with the housing (5) or the ring wheel (2) or may be brought into a neutral position.

12. The transferbox according to any one of the claims 1 to 7, characterised in thatthe second planet gear (P2) is located in front of the upper chain wheel (21b) or driving gear wheel (21), the first planet gear (P1) is located behind the upper chain wheel (21 b) or driving gear wheel (21), the connected sun wheels (1, 11) are hollow bodies positioned at a larger diameter than the input shaft (6), the intermediate shaft (16) is a hollow shaft positioned at a larger diameter than the input shaft (6) and the sun wheels (1, 11), the front side of the planet carrier (4) is connected to the rear output shaft (25) and the front side of the planet carrier (14) is engageable with the housing (5) or the ring wheel (2) or may be brought into a neutral position.

13. The transferbox according to any one of the claims 1 to 7, characterised in thatthe second planet gear (P2) is located in front of the first planet gear (P1), the upper chain wheel (21 b) or driving gear wheel (21) is located behind the first planet gear (P1), the connected sun wheels (1, 11) are hollow bodies positioned at a larger diameter than the input shaft (6), the connection between the front side of the planet carrier (4) and the rear output shaft (25) is a hollow shaft positioned at a larger diameter than the ring wheel (2), the front side of the planet carrier (14) is connected to the rear output shaft (25) and the front side of the planet carrier (14) is engageable with the housing (5) or the ring wheel (2) or may be brought into a neutral position.

14. The transferbox according to any one of the claims 1 to 13, **characterised in that** the gearshift (17) is formed by at least one engaging and disengagingclutch, a shiftable shift sleeve or at least by a positive locking clutch.

15. The transferbox according to any one of the claims 1 to 14, **characterised in that** a coupling unit (18) for disengaging the driving connection between the intermediate shaft (16) and the driving wheel (21) or the upper chain wheel (21 b) is provided.

**Revendications**

1. Une boîte de transfert comprenant un boîtier (5), un arbre d'entrée (6), un arbre de sortie postérieur (25), un arbre de sortie antérieur (24) et deux engrenages planétaires (P1, P2),

ledit arbre de sortie postérieur (25) étant coaxial par rapport audit arbre d'entrée (6) ;

ledit arbre de sortie antérieur (24) étant décalé par rapport audit arbre d'entrée (6) ;

lesdits deux engrenages planétaires (P1, P2) étant coaxiales par rapport audit arbre d'entrée (6) ;

le premier engrenage planétaire (P1) étant un simple train planétaire se composant d'une couronne (2), d'une roue solaire (1), d'un arbre porte-satellite (4) et de plusieurs satellites (13) montés de manière à pouvoir tourner dans ce dernier;

le deuxième engrenage planétaire (P2) étant un simple train planétaire se composant d'une couronne (12), d'une roue solaire (11), d'un arbre porte-satellite (14) et de plusieurs satellites (13) soutenus par celui-ci de façon rotatoire ;

**caractérisée en ce que**

l'arbre d'entrée (6) est relié à la couronne (2);

l'arbre de sortie postérieur (25) est relié à l'arbre porte-satellite (4) ;

la couronne (12) en vue de son entraînement, le cas échéant par l'intermédiaire d'un arbre intermédiaire (16), est reliée à un engrenage de décalage (V) agissant sur l'arbre de sortie antérieur (24),

la roue solaire (1) du premier engrenage planétaire (P1) est reliée à la roue solaire (11) du deuxième engrenage planétaire (P2) ou formée d'une piece avec celui-ci, et **en ce que** l'arbre porte-satellite (14) est embrayableavec le boîtier (5) et/ou la couronne (2) à travers un levier de vitesse (17) ou occupe une position neutre.

2. Boîte de transfert selon la revendication 1, **caractérisée en ce que** ledit engrenage de décalage (V) est configuré à la manière d'une boite à chaîne dentéecomprenant un pignon supérieur (21b), une chaîne dentée (22b) et un pignon inférieur (23b).

3. Boîte de transfert selon la revendication 1, **caractérisée en ce que** ledit engrenage de décalage (V) est configuré à la manière d'une transmission avec pignons droits (21, 22, 23).

4. Boîte de transfert selon une des revendications 1 à 3, **caractérisée en ce que** un accouplement de blocage (27) est prévu, à travers lequel l'arbre de sortie postérieur (25) peut être relié à l'arbre intermédiaire (16) et/ou la couronne (12) et /ou le pignon droit (21) et/ou le pignon (21 b).

5. Boîte de transfert selon une des revendications 1 à 4, **caractérisée en ce que** ledit accouplement de blocage (27) est configuré à la manière d'un accouplement à friction ajustable ou d'un accouplement à friction précontraint par force de ressort ou d'un accouplement à friction hydraulique ou d'un accouplement, embrayable et à engagement positif, à griffes ou à denture.

6. Boîte de transfert selon une des revendications 1 à 5, **caractérisée en ce que** le levier de vitesse (17) de l'arbre porte-satellite (4) est synchronisé avec le boîtier (5) et/ou **en ce que** le levier de vitesse (4) est synchronisé avec la couronne (2).

7. Boîte de transfert selon une des revendications 1 à 6, **caractérisée en ce que** les deux roues solaires (1, 11) ont les mêmes caractéristiques de denture et/ou sont réalisées d'un seul tenant et/ou **en ce que** les satellites (3, 13) sont configurées de la même façon et/ou **en ce que** les couronnes (2, 12) ont les mêmes caractéristiques de denture et/ou **en ce que** les arbres porte-satellite (4, 14) sont configurés de la même façon.

8. Boîte de transfert selon une des revendications 1 à 7, **caractérisée en ce que** le premier train planétaire (P1) est situé devant le deuxième train planétaire (P2), **en ce que** le pignon supérieur (21 b) ou pignon de sortie supérieur (21) est situé derrière le deuxième train planétaire (P2), le côté antérieur de l'arbre porte-satellite (4) est reliée avec l'arbre de sortie postérieur (25), les roues solaires (1, 11), reliées l'une avec l'autre, sont réalisées commedes corps creux sur un diamètre supérieur par rapport à l'arbre de sortie postérieur (25), l'arbre intermédiaire (16) est réalisé commeun arbre creux sur un diamètre supérieur par rapport à l'arbre de sortie postérieur (25) et le côté antérieur de l'arbre porte-satellite (14) est embrayable avec le boîtier (5) ou avec la couronne ou peut occuper une position neutre.

9. Boîte de transfert selon une des revendications 1 à 7, **caractérisée en ce que** le premier train planétaire (P1) est disposé devant le pignon supérieur (21b), le deuxième train planétaire (P2) se situe derrière le pignon supérieur (21 b) ou pignon de sortie supérieur (21), le côté antérieur de l'arbre porte-satellite (4) est relié avec l'arbre de sortie postérieur (25), les roues solaires (1, 11), reliées l'une avec l'autre, sont réalisées comme des corps creux sur un diamètre supérieur par rapport à l'arbre de sortie postérieur (25), le côté antérieur de l'arbre porte-satellite (14) est réalisé comme un corps creux sur un diamètre supérieur par rapport aux roues solaires (1, 11) et s'étend jusqu'au levier de vitesse (17), l'arbre intermédiaire (16) est réalisé à la manière d'un arbre creux sur un diamètre supérieur par rapport au lien entre le levier de vitesse (17) et l'arbre porte-satellite (14), et le côté antérieur de l'arbre porte-satellite (14) est embrayable avec le boîtier (5) ou avec la couronne (2) ou peut occuper une position neutre.

10. Boîte de transfert selon une des revendications 1 à 7, **caractérisée en ce que** le pignon supérieur (21 b) ou pignon de sortie supérieur (21) est disposé devant le premier train planétaire (P1), le deuxième train planétaire (P2) est disposé derrière le pignon supérieur (21 b) ou pignon de sortie supérieur (21), le côté antérieur de l'arbre porte-satellite (4) est relié avec l'arbre de sortie postérieur (25), les roues solaires (1, 11), reliées l'une avec l'autre, sont réalisées comme des corps creux sur un diamètre supérieur par rapport à l'arbre de sortie postérieur (25), le côté antérieur de l'arbre porte-satellite (14) est réalisé sur un diamètre supérieur et s'étend à travers la couronne (2) et l'arbre d'entrée jusqu'au levier de vitesse, l'arbre intermédiaire (16) est disposé à la manière d'un arbre creux sur un diamètre supérieur par rapport au lien entre le levier de vitesse (17) et l'arbre porte-satellite et le côté antérieur de l'arbre porte-satellite (14) est embrayable avec le boîtier (5) ou avec la couronne (2) ou peut occuper une position neutre.

11. Boîte de transfert selon une des revendications 1 à 7, **caractérisée en ce que** le pignon supérieur (21 b) ou pignon de sortie supérieur (21) est disposé devant le deuxième train planétaire (P2), le premier train planétaire (P1) es disposé devant le deuxième train planétaire (P2), les roues solaires (1, 11) reliées l'une avec l'autre sont réalisées comme des corps creux sur un diamètre supérieur par rapport à l'arbre d'entrée (6), le lien entre le côté antérieur de l'arbre porte-satellite (14) et le levier de vitesse (17) est réalisé à la manière d'un arbre creux sur un diamètre supérieur par rapport à l'arbre d'entrée (6), l'arbre intermédiaire (16) est réalisé à la manière d'un arbre creux sur un diamètre supérieur par rapport au lien entre le côté antérieur de l'arbre porte-satellite et le levier de vitesse (17), le côté antérieur de l'arbre porte-satellite (4) est embrayable avec le boîtier (5) ou avec la couronne (2) ou peut occuper une position neutre.

12. Boîte de transfert selon une des revendications 1 à 7, **caractérisée en ce que** le deuxième train planétaire (P2) est disposé devant le pignon supérieur (21 b) ou pignon de sortie supérieur (21), le premier train planétaire (P1) est situé derrière le pignon supérieur (21b) ou pignon de sortie supérieur (21), le roues solaires (1, 11) sont réalisées comme un corps creux sur un diamètre supérieur par rapport à l'arbre d'entrée (6), l'arbre intermédiaire (16) est réalisé à la manière d'un arbre creux sur un diamètre supérieur par rapport à l'arbre d'entrée (6) et aux roues solaires (1, 11), le côté antérieur de l'arbre porte-satellite (4) est relié avec l'arbre de sortie postérieur (25) et le côté antérieur de l'arbre porte-satellite (14) est embrayable avec le boîtier (5) ou avec la couronne (2) ou peut occuper une position neutre.

13. Boîte de transfert selon une des revendications 1 à 7, **caractérisée en ce que** le deuxième train planétaire (P2) est disposé devant le premier train planétaire (P1), le pignon supérieur (21 b) ou pignon de sortie supérieur (21) se situe derrière le premier train planétaire (P1), les roues solaires (1, 11) reliées l'une avec l'autre, sont réalisées comme des corps creux sur un diamètre supérieur par rapport à l'arbre d'entrée (6), le lien entre le côté antérieur de l'arbre porte-satellite (4) et l'arbre de sortie postérieur (25) est réalisé à la manière d'un arbre creux sur un diamètre supérieur par rapport à la couronne (2), le côté antérieur de l'arbre porte-satellite (14) est relié avec l'arbre de sortie postérieur (25) et le côté antérieur de l'arbre porte-satellite (14) est embrayable avec le boîtier (5) ou avec la couronne (2) ou peut occuper une position neutre.

14. Boîte de transfert selon une des revendications 1 à 13, **caractérisée en ce que** le levier de vitesse (17) est formé au moins d'un accouplement embrayable, un manchon de commande ou au moins d'un accouplement à engagement positif.

15. Boîte de transfert selon une des revendications 1 à 14, **caractérisée en ce qu'**une unité d'accouplement (18) est prévue, celle-ci pouvant désengager la liaison d'entraînement entre l'arbre intermédiaire (16) et le pignon droit (21) ou le pignon supérieur (21 b).

Fig. 1

Fig. 2

Fig. 3

Fig. 4

Fig. 5

Fig. 6

100 U/min
400 Nm

100 U/min
600 Nm

5

0 U/min
0 Nm

17

2

12

3

13

21

100 U/min
400 Nm

1

11

16

6

25

100 U/min
1000 Nm

100 U/min
200 Nm

100 U/min
600 Nm

Fig. 7a

100 U/min
400 Nm

100 U/min
600 Nm

5

0 U/min
0 Nm

17

2

12

3

13

21

110 U/min
400 Nm

1

11

16

6

25

100 U/min
1000 Nm

80 U/min
200 Nm

93,3 U/min
600 Nm

Fig. 7b

100 U/min
1000 Nm

0 U/min
1500 Nm

5

17

2

3

12

13

21

40 U/min
1000 Nm

1

11

16

6

25

100 U/min
1000 Nm

-80 U/min
500 Nm

40 U/min
1500 Nm

Fig. 8a

100 U/min
1000 Nm

0 U/min
1500 Nm

5

17

2

3

12

13

21

44 U/min
1000 Nm

1

11

16

6

25

100 U/min
1000 Nm

-88 U/min
500 Nm

34 U/min
1500 Nm

Fig. 8b

EP 2 470 392 B1

Fig. 9

22

Fig. 10

**EP 2 470 392 B1**

**IN DER BESCHREIBUNG AUFGEFÜHRTE DOKUMENTE**

**In der Beschreibung aufgeführte Patentdokumente**

- DE 19538661 C
- WO 002002065000 A2
- WO 002002008006 A1
- WO 001999001310 A1
- EP 000001254326 B1
- US 4569252 A
- WO 0242106 A